# EUROPEAN PATENT APPLICATION

(11) **EP 2 426 584 A1**
(43) Date of publication of application: **07.03.2012**
(21) Application number: 11174874.5
(22) Date of filing: 21.07.2011
(51) Int. Cl.: G06F 3/048

(54) **Information processing apparatus, method, and program**

(30) Priority: 06.09.2010 JP 2010198801; 10.11.2010 JP 2010251986
(71) Applicant: Sony Corporation, Tokyo 108-0075 (JP)
(72) Inventor: Noda, Takuro, Minato-ku, Tokyo 108-0075 (JP)
(74) Representative: Davies, Simon Robert

(57) **Abstract**

Provided is an information processing apparatus, including a display section including a screen, a touch panel arranged such that the touch panel is superimposed on the screen, and a controller configured to detect a predetermined mode-changing operation including an operation in which at least two points on the touch panel are pointed as a static point and a moving point, respectively, and to set a writing mode, and to input a series of coordinate data corresponding to a moving path of the moving point as write data.

## Description

The present invention relates to an information processing apparatus which may receive operation-inputs by a user through a touch panel, an information processing method, and a program.

In an information processing apparatus such as, for example, a smartphone, a PDA, or a personal computer, a user trails his finger or a pen on a screen on which contents are displayed in a manner that he draws characters and lines. Therefore, information on trailed positions may be displayed on the screen as marking information on the contents that a user browses, and stored in relation with the contents. Such a function is installed in quite a lot of information processing apparatuses.

However, such a kind of function is installed as an application which may be used only after execution of an operation in which the function is selected and called by a user browsing the contents. Therefore, it is difficult to seamlessly execute operations from browsing contents to marking on the contents. More specifically, the operation of selecting and calling a function generally includes a plurality of operation-procedures. The plurality of operation-procedures include calling a menu screen on which a user may select a target function, and selecting an icon or an item to which the target function is allocated on the menu screen. Alternatively, an operation of selecting a shortcut to which the function is allocated may be employed. However, in any case, a user turns his eyes away from contents that he browses once, and performs an operation for calling a function. Therefore, a user may find the operation troublesome.

Japanese Patent Application Laid-open No. 2007-233649 (paragraphs 0019-0028, Fig. 4) (hereinafter, referred to as Patent Document 1) discloses an information processing apparatus including means for omitting the above-mentioned operation of selecting a function. That is, an information processing apparatus described in Patent Document 1 includes a liquid crystal display device and a tablet. The tablet is arranged on the front surface of the liquid crystal display device, and receives handwriting-input operations with fingers or a pen. A sensor is provided around the tablet. The sensor detects pressures of a palm of a user who operates the tablet. A processor determines, when a pen or a finger touches the tablet, if a palm of a user who operates the tablet is pressed against the sensor based on outputs of the sensor. Further, when a palm of a user who operates the tablet is pressed against the sensor, a contents-operation/edit mode is executed. When a palm is not pressed against the sensor, a contents-scroll mode is executed. Therefore, in a case of browsing Web pages, by dragging a screen with a pen without touching the computer with a palm, the display may be freely scrolled from side to side and up and down. Meanwhile, when a palm touches the computer, scroll is not executed. In this case, a user may click links and buttons on Web pages with a pen, input characters in a search window and the like on Web pages, and execute other operations.

Conventionally, when a contents-browsing screen is displayed, in order to input handwriting data on the contents, an operation of separately selecting and calling a writing function may be executed by a user. Therefore, it is difficult to seamlessly execute operations from browsing contents to writing in the contents.

Further, according to a known technology described in Patent Document 1, it is necessary to provide a sensor to detect pressures of a palm of a user who operates a tablet. As a result, the size of the apparatus may be increased.

Various respective aspects and features of the invention are defined in the appended claims. Combinations of features from the dependent claims may be combined with features of the independent claims as appropriate and not merely as explicitly set out in the claims.

The approach described herein helps to provide an information processing apparatus which may easily call a writing function on displayed contents through an operation on a touch panel, start a handwriting-input operation, and improve operability, an information processing method, and a program.

According to one embodiment of the present invention, there is provided an information processing apparatus, including a display section including a screen, a touch panel arranged such that the touch panel is superimposed on the screen, and a controller configured to detect a predetermined mode-changing operation including an operation in which at least two points on the touch panel are pointed as a static point and a moving point, respectively, and to set a writing mode, and to input a series of coordinate data corresponding to a moving path of the moving point as write data.

According to one embodiment of the present invention, the controller may change to the handwriting-input mode based on a predetermined operation on the touch panel, and start input of handwriting data immediately. Further, an action to establish the operation mode to execute handwriting input on the touch panel by a user itself may be detected as an operation to change to the handwriting-input mode. Therefore, a user may shift to the handwriting-input operation seamlessly, and operability may be improved.

The controller may be configured to cancel, determining that neither the static point nor the moving point are detected when the writing mode is set, the writing mode. Therefore, even if a finger of a user pointing the static point or the moving point is temporarily removed from the touch panel, the writing mode is continued. So, operability may be improved.

The controller is configured to determine, in a case where a moving speed of a determined point is less than a first threshold, the point as the static point, and to determine, in a case where a moving speed of a determined point is equal to or more than the first threshold, the point as the moving point.

Further, the controller may be configured to redetermine, when a moving speed of a point determined as the moving point reaches a value equal to or less than a second threshold smaller than the first threshold, the moving point as the static point. The second threshold is set to a value enough smaller than the first threshold. Therefore, after the moving point is determined, the possibility that the point is changed from a moving point to a static point against a user's will is reduced. Therefore, malfunctions of operations generated by frequent changes of a moving point and a static point may be reduced.

Further, the controller may be configured to detect an operation in which a plurality of static points and one moving point are pointed simultaneously as the mode-changing operation.

Alternatively, the controller may be configured to detect an operation in which one static point and one moving point are pointed simultaneously and a size of the static point and a size of the moving point satisfy a predetermined relation as the mode-changing operation.

Alternatively, the controller may be configured to detect an operation in which one static point and one moving point are pointed simultaneously and the static point is pointed in a change area defined on the touch panel as the mode-changing operation.

Alternatively, the controller may be configured to detect an operation in which one static point is pointed with a finger and one moving point is pointed with a pen simultaneously as the mode-changing operation.

Alternatively, the controller may be configured to detect an operation in which one static point and one moving point are pointed simultaneously and the moving point moves for a predetermined angle or more and for a predetermined distance or more as the mode-changing operation.

According to another embodiment of the present invention, there is provided an information processing method, including detecting, by a controller, a predetermined mode-changing operation including an operation in which at least two points on a touch panel arranged such that the touch panel is superimposed on a screen are pointed as a static point and a moving point, respectively, and setting a writing mode, and inputting, by the controller, a series of coordinate data corresponding to a moving path of the moving point as write data.

According to another embodiment of the present invention, there is provided a program, causing a computer to function as a controller configured to detect a predetermined mode-changing operation including an operation in which at least two points on a touch panel arranged such that the touch panel is superimposed on a screen are pointed as a static point and a moving point, respectively, and to set a writing mode, and to input a series of coordinate data corresponding to a moving path of the moving point as write data.

As described above, according to various embodiments of the present invention, a writing function on displayed contents may be easily called through an operation on a touch panel, a handwriting-input operation may be started, and operability may be improved.

Embodiments of the invention will now be described with reference to the accompanying drawings, throughout which like parts are referred to by like references, and in which:
Fig. 1 is a perspective view showing an outer-appearance image of an information processing apparatus according to an embodiment of the present invention;
Fig. 2 is a perspective view explaining a structure of the information processing apparatus of Fig. 1;
Fig. 3 is a block diagram showing a hardware configuration of the information processing apparatus of Fig. 1;
Fig. 4 is a flowchart relating to processing according to operations on a touch panel in the information processing apparatus of Fig. 1;
Fig. 5 is a diagram showing an example of an operation mode of an operation 1;
Fig. 6 is a diagram showing a relation between content data and write data;
Fig. 7 is a flowchart relating to processing according to operations on the touch panel in the information processing apparatus according to a second embodiment;
Fig. 8 is a diagram showing a change area for changing to a handwriting-input mode provided on a detection surface of the touch panel of the information processing apparatus according to a third embodiment;
Fig. 9 is a flowchart relating to processing according to operations on the touch panel in the information processing apparatus according to the third embodiment;
Fig. 10 is a diagram explaining a modified example of the third embodiment;
Fig. 11 is a flowchart relating to processing according to operations on the touch panel in the information processing apparatus of a fourth embodiment;
Fig. 12 is a diagram explaining a determination method of an operation 5 in the information processing apparatus of a fifth embodiment in detail;
Fig. 13 is a diagram explaining determination of a pinch operation in the information processing apparatus of the fifth embodiment in detail; and
Fig. 14 is a flowchart relating to processing according to operations on the touch panel in the information processing apparatus of the fifth embodiment.

Hereinafter, various embodiments of the present invention will be described with reference to the drawings.

The embodiments relate to an information processing apparatus employing a mode in which a touch panel is arranged on a screen of a display section. In the information processing apparatus of the approach described herein, display data of contents and the like is displayed on the screen. In this state, a user performs a "predetermined change operation to handwriting-input mode" on the touch panel. As a result, the handwriting-input mode is set, and handwriting data may be written.

The "predetermined change operation to handwriting-input mode" is an operation in which at least one point on the touch panel is pointed statically and one other point is pointed dynamically. Hereinafter, a point pointed statically is referred to as "static point", and a point pointed dynamically is referred to as "moving point".

More specifically, as the "predetermined change operation to handwriting-input mode", the following operations are employed.

Operation 1: An operation in which a plurality of static points and one moving point are pointed simultaneously.

Operation 2: An operation in which one static point and one moving point are pointed simultaneously, and a size of the static point and a size of the moving point satisfy a predetermined relation.

Operation 3: An operation in which one static point and one moving point are pointed simultaneously, and the static point is pointed in a predetermined defined area on the touch panel.

Operation 4: An operation in which one static point is pointed with a finger and a moving point is pointed with a pen simultaneously.

Specific product modes of the information processing apparatus of the embodiments include smartphones, PDAs (Personal Digital Assistants), mobile personal computers, remote-control devices for household electrical appliances, and the like. As a matter of course, it is needless to say that the information processing apparatus of the embodiments is applicable to other product modes.

Hereinafter, the information processing apparatus of the various embodiments will be described in more detail.

### (First Embodiment)

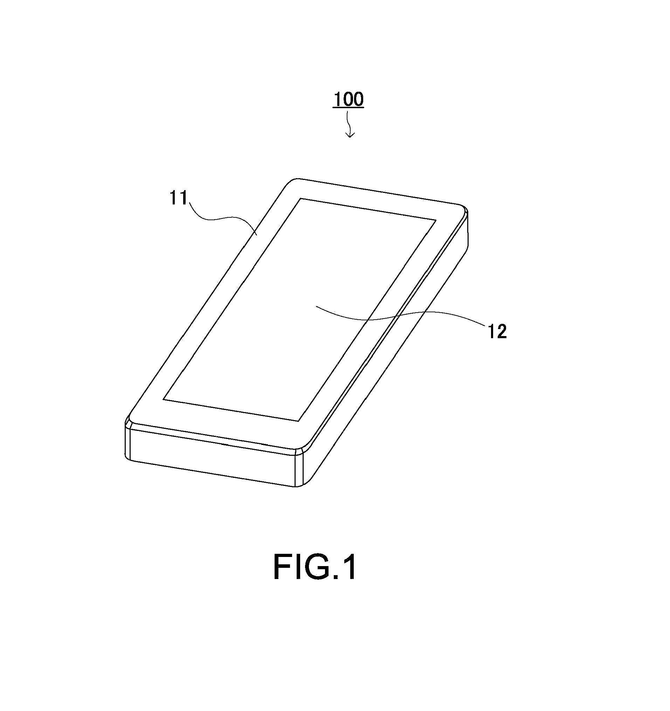

Fig. 1 is a diagram showing an outer-appearance image of an information processing apparatus according to one embodiment of the present invention.

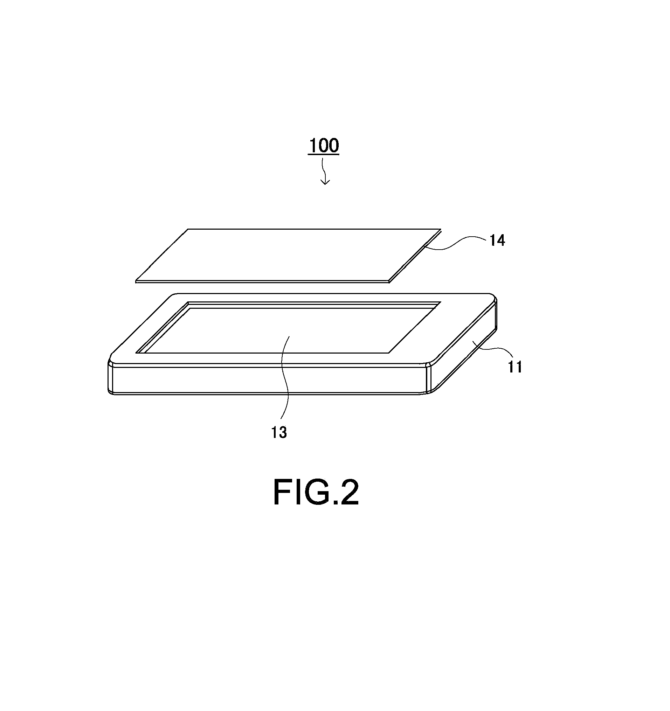

As shown in Fig. 1, an information processing apparatus 100 of this embodiment includes a case 11. The case 11 has a shape similar to a rectangular parallelepiped having a small thickness compared to sizes of a length and a width. The size of the case 11 is that a user may grasp it with one hand or larger than that. In the case 11 similar to a rectangular parallelepiped, various electrical devices structuring the information processing apparatus 100 are stored. On one main surface of the case 11, a display section 12 including a touch panel is arranged. The main surface of the case 11 and an input/output surface of the display section 12 including a touch panel are approximately on the same plane. As shown in Fig. 2, the display section 12 including a touch panel includes a display panel 13 and a touch panel 14. The display panel 13 is, for example, a liquid crystal display panel, an organic EL (electroluminescence) display panel, or the like. The touch panel 14 is arranged such that the touch panel 14 is superimposed on a screen of the display panel 13. The touch panel 14 is, for example, a capacitive touch panel or the like. The touch panel 14 may employ another type which may detect a plurality of positions pointed by a user simultaneously. The touch panel 14 may be, for example, pressure-sensitive, infrared, acoustic, or the like.

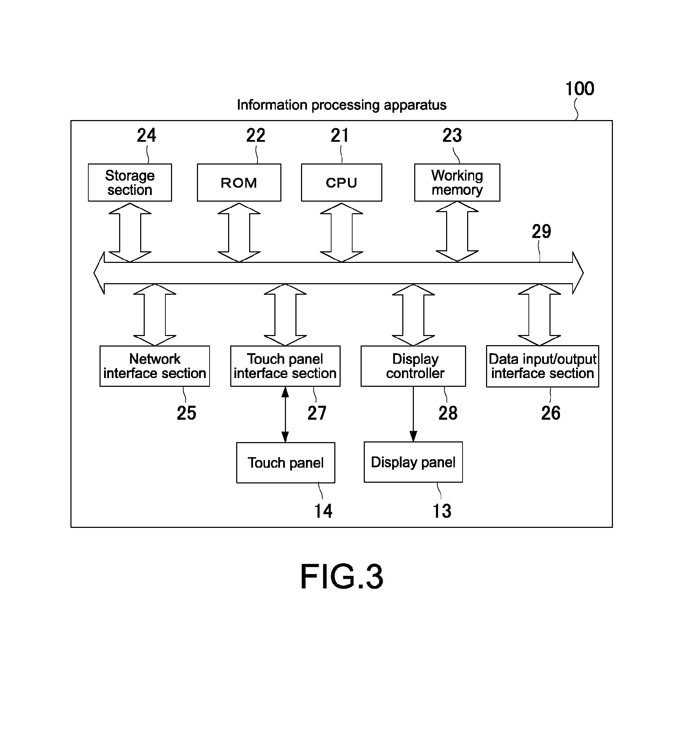

Fig. 3 is a diagram showing a hardware configuration of the information processing apparatus 100 of Fig. 1.

As shown in Fig. 3, the information processing apparatus 100 includes a CPU 21, a ROM 22, a working memory 23, a storage section 24, a network interface section 25, a data input/output interface section 26, a touch panel interface section 27, a display controller 28, the touch panel 14, the display panel 13, a system bus 29, and the like.

The ROM 22 stores programs executed by the CPU 21, various fixed data, and the like.

The working memory 23 is a memory used as a work space for arithmetic processing by the CPU 21.

The storage section 24 is an apparatus storing user data such as data of contents of, for example, image, document, moving image, and music. The storage section 24 is, more specifically, a rewritable mass-storage device such as a memory card, an SSD (Solid State Drive), or an HDD (Hard Disk Drive).

The network interface section 25 is an interface executing wired/wireless connection processing with a network such as the Internet or a local area network.

The data input/output interface section 26 is an interface section used for input/output of digital data to/from an external apparatus. More specifically, the data input/output interface section 26 is, for example, an HDMI (Hign-Definition Multimedia Interface) interface or the like.

The touch panel interface section 27 controls the touch panel 14, and generates digital coordinate data based on detection signals obtained by the touch panel 14.

The display controller 28 generates display data output to the display panel 13.

The CPU (Central Processing Unit) 21 controls the respective sections structuring the information processing apparatus 100, and controls input/output of data between the respective sections. Further, the CPU 21 may execute programs stored in the ROM 22 and the working memory 23, and execute various processing. For example, the CPU 21 may decode data of contents stored in the storage section 24, Web pages downloaded from the Internet, and the like according to programs for browsing contents, supply the decoded results to the display controller 28, cause the display panel 13 to display the decoded results, and execute other processing.

Further, the CPU 21 determines various operations of the touch panel 14 by a user according to a program for inputting operations to the touch panel 14, and executes various processing according to the determined operations. Here, the determined operations mainly include
1. drag operation,
2. pinch operation,
3. handwriting-input operation, and the like.

The CPU 21 determines the respective operations, and changes input modes. Therefore, the CPU 21 executes processing according to the respective operations.

### (Behaviors in this embodiment)

Next, behaviors of the information processing apparatus 100 of this embodiment will be described.

First, the behavior of the information processing apparatus 100 of this embodiment in a case where the touch panel 14 is operated will be described. Note that it is assumed that the operation 1 is employed as the "predetermined change operation to handwriting-input mode".

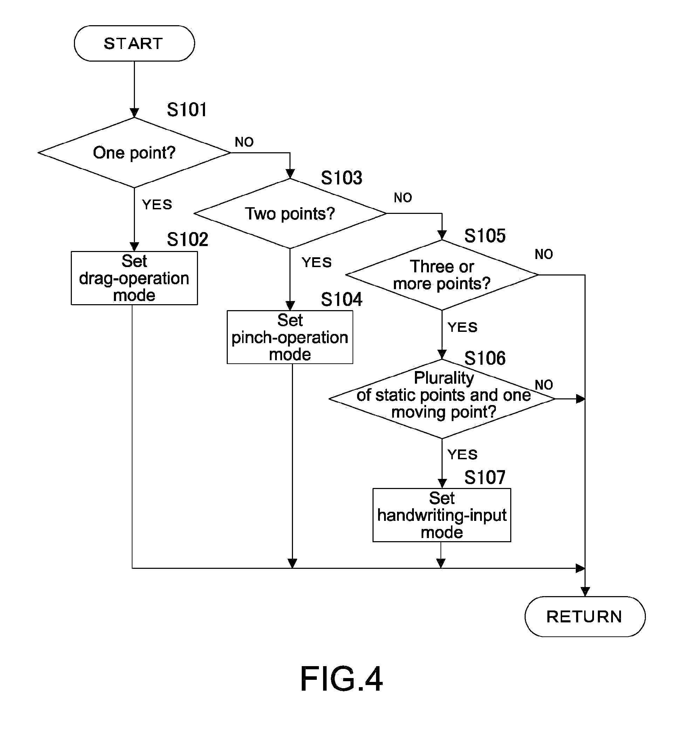

Fig. 4 is a flowchart relating to processing according to operations on the touch panel 14 in the information processing apparatus 100 of this embodiment.

The CPU 21 determines the number of points pointed by a user based on a series of coordinate data input from the touch panel 14 via the touch panel interface section 27. In a case of determining that only one point is pointed (Step S101, YES), the CPU 21 sets the drag-operation mode, and executes processing corresponding to the drag operation according to movement of the pointed point (Step S102). Examples of processing corresponding to the drag operation include, for example, scrolling pages, moving a displayed object, and the like.

Further, in a case of determining that two points are pointed (Step S103, YES), the CPU 21 sets the pinch-operation mode, and executes processing corresponding to the pinch operation according to movements of the two pointed points (Step S104). Examples of the pinch operation include "pinch-out" and "pinch-in". "Pinch-out" is an operation in which two pointed points gradually move apart from each other. "Pinch-in" is an operation in which two points gradually move close to each other. To pinch-out, for example, processing of enlarging display contents is allocated. To pinch-in, for example, processing of reducing display contents in size is allocated.

Further, in a case of determining that three or more points are pointed (Step S105, YES), the CPU 21 determines if the above-mentioned condition of the operation 1 is established. That is, the CPU 21 determines if the three points are a plurality of static points and one moving point (Step S106). Here, static points and a moving point are determined, for example, as follows.

The CPU 21 calculates moving speeds of the respective points that the CPU 21 has determined to be pointed by a user. In a case where the moving speed is less than a first threshold, the CPU 21 determines that the point is a "static point". In a case where the moving speed is equal to or more than the first threshold, the CPU 21 determines that the point is a "moving point".

Further, the CPU 21 monitors a moving speed also after the point is determined as a moving point. When the moving speed reaches a value equal to or less than a second threshold, the CPU 21 changes the point from a moving point to a static point. Here, the second threshold is a value smaller than the first threshold. In this manner, after the moving point is determined, the possibility that the point is changed from a moving point to a static point against a user's will is reduced.

Determining that the condition of the the operation 1 is established (Step S106, YES), the CPU 21 sets a handwriting-input mode (Step S107). After that, the CPU 21 executes processing to generate user-write data based on a series of coordinate data of the detected moving point. In a case where the above-mentioned condition of the operation 1 is not established, the flow returns to Step S101.

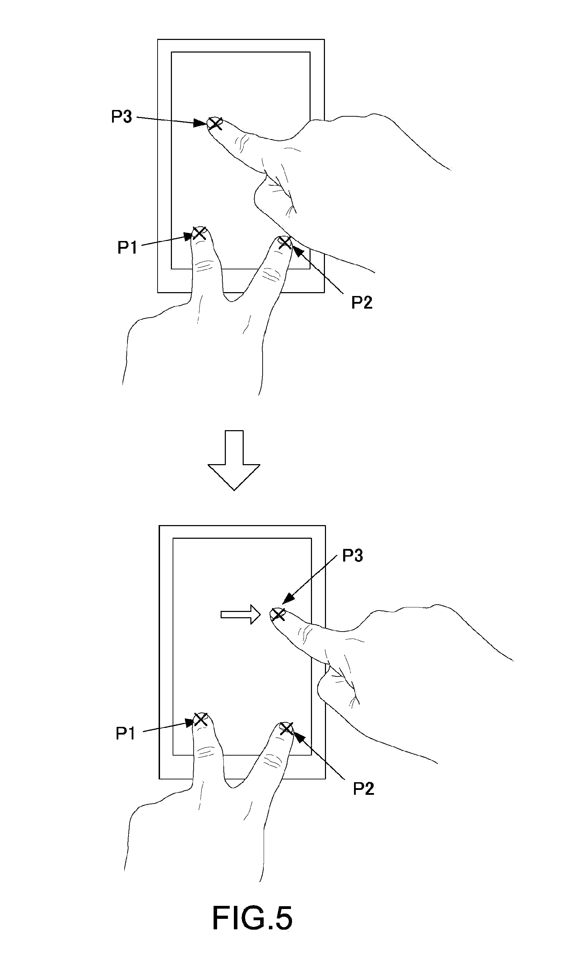

Fig. 5 is a diagram showing an example of an operation mode of the operation 1. In this example, for example, a user points two static points P1, P2 with two fingers of the left hand, and points a moving point P3 with a finger of the right hand. Because of this operation, the handwriting-input mode is set. After that, a user slides the fingertip of the right hand on the surface of the touch panel 14. Therefore, coordinate data series corresponding to the moving path of the moving point P3 is input.

Meanwhile, after the handwriting-input mode is once set, the handwriting-input mode may be continued until a state where neither the two static points P1, P2 nor the one moving point P3 are detected. As a result, after the change to the handwriting-input mode, handwriting data may be input also by moving the moving point P3 where only the moving point P3 remains on the touch panel 14. In the case where neither the two static points P1, P2 nor the one moving point P3 are detected under the handwriting-input mode, the CPU 21 resets the set mode, and executes mode-changing processing corresponding to the operation on the touch panel 14 from the beginning. Note that the similar continuation and reset of a mode and restart of mode-changing processing are applied to not only the handwriting-input mode, but also the drag operation mode and the pinch-operation mode.

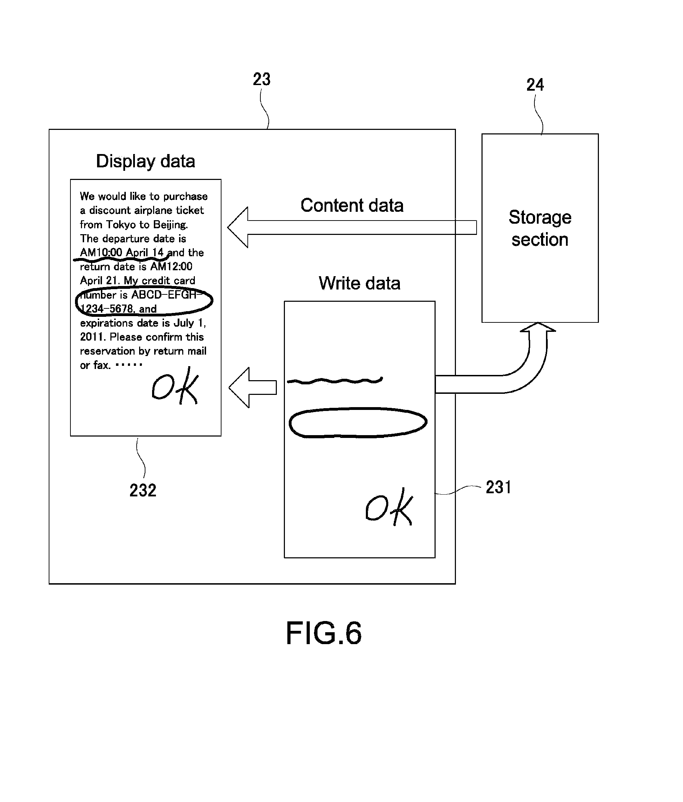

Fig. 6 is a diagram showing a relation between content data and write data.

The CPU 21 executes normalization processing such as removal of noise components to a series of input coordinate data to thereby generate write data. As shown in Fig. 6, the CPU 21 stores the write data in a write-data area 231 provided in the working memory 23. In addition, the CPU 21 expands the data in a display memory 232 to thereby cause the display panel 13 to display the data. As a result, a user may confirm the written contents in real time. Write data with respect to contents is data spatially corresponding to display data of contents. For example, the write data is bitmap data or the like. Receiving an instruction to store write data from a user, the CPU 21 reads out write data from the write-data area 231 in the working memory 23. Further, the CPU 21 stores the data in the storage section 24 in which the data is in relation with index data for search such as created date and time and content-data identification information, for example.

Further, based on a call instruction from a user, write data stored in the storage section 24 may be expanded in the write-data area 231 and the display memory 232, and displayed on the display panel 13. Further, the handwriting-input mode may be set again, and a writing operation may be restart.

As described above, according to this embodiment, change to the handwriting-input mode may be executed based on a predetermined operation on the touch panel 14, and input of handwriting data may be started immediately. Further, an action to establish the operation mode to execute handwriting input on the touch panel 14 by a user itself may be detected as an operation to change to the handwriting-input mode. Therefore, a user may shift to the handwriting-input operation seamlessly, and operability may be improved.

### (Second Embodiment)

Next, the information processing apparatus in which the operation 2 is employed as the "predetermined change operation to handwriting-input mode" will be described.

In this embodiment, the CPU 21 determines if a plurality of points pointed by a user are static points or moving points and, in addition, determines sizes of the respective points.

For example, a static point is pointed with a thumb, and a moving point is pointed with a forefinger. Here, the size of a point pointed with a thumb is larger than the size of a point pointed with a forefinger. Therefore, based on the sizes of pointed points, fingers used in the pointing may be determined.

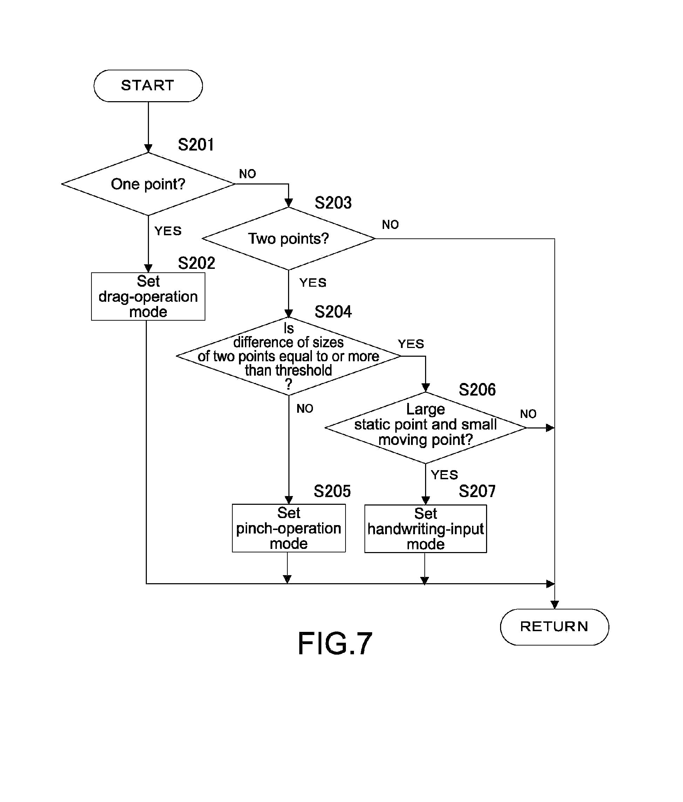

Fig. 7 is a flowchart relating to processing according to operations on the touch panel 14 in the information processing apparatus of this embodiment.

The CPU 21 determines the number of points pointed by a user based on a series of coordinate data input from the touch panel 14 via the touch panel interface section 27. In a case of determining that only one point is pointed (Step S201, YES), the CPU 21 sets the drag-operation mode, and executes processing corresponding to the drag operation according to movement of the pointed point (Step S202).

Further, in a case of determining that two points are pointed (Step S203, YES), the CPU 21 compares the sizes of those two points, and determines if the difference of the sizes of the two points is equal to or more than a predetermined threshold (Step S204). In a case of determining that the difference of the sizes of the two points is less than the predetermined threshold (Step S204, NO), the CPU 21 sets the pinch-operation mode, and executes processing corresponding to the pinch operation according to movements of the two pointed points (Step S205). Note that, although it is assumed that the difference of the sizes of two points is evaluated here, the size ratio of two points may be evaluated.

In a case where the difference of the sizes of two points is equal to or more than a predetermined threshold (Step S204, YES), the CPU 21 determines if the above-mentioned condition of the operation 2 is established. That is, the CPU 21 determines if the point larger in size is a static point and the point smaller in size is a moving point (Step S206). Determining that the condition of the operation 2 is established (Step S206, YES), the CPU 21 sets the handwriting-input mode, and generates user-write data based on a series of coordinate data of the moving point (Step S207).

Note that, in a case where the condition of the above-mentioned operation 2 is not established, the handwriting-input operation is not executed.

As described above, according to this embodiment, change to the handwriting-input mode may be executed based on a predetermined operation on the touch panel 14, and input of handwriting data may be started immediately. Further, an action to establish the operation mode to execute handwriting input on the touch panel 14 by a user itself may be detected as an operation to change to the handwriting-input mode. Therefore, a user may shift to the handwriting-input operation seamlessly, and operability may be improved.

### (Third Embodiment)

Next, the information processing apparatus in which the operation 3 is employed as the "predetermined change operation to handwriting-input mode" will be described.

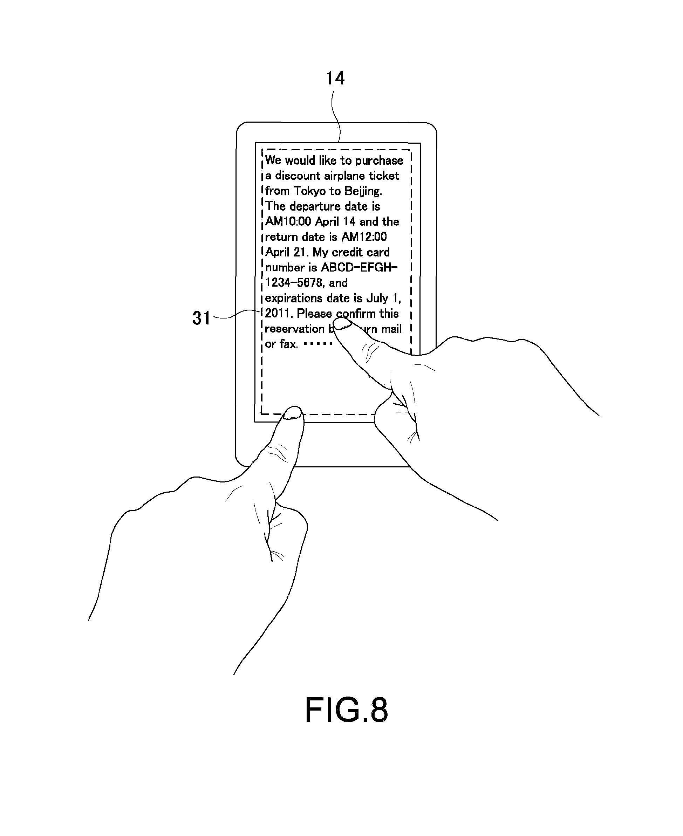

In this embodiment, as shown in Fig. 8 for example, a change area 31 for changing to the handwriting-input mode is set in edge portions of four sides of the detection surface of the touch panel 14. Determining that any position in the change area 31 is pointed as a static point and one moving point is pointed, the CPU 21 sets the handwriting-input mode.

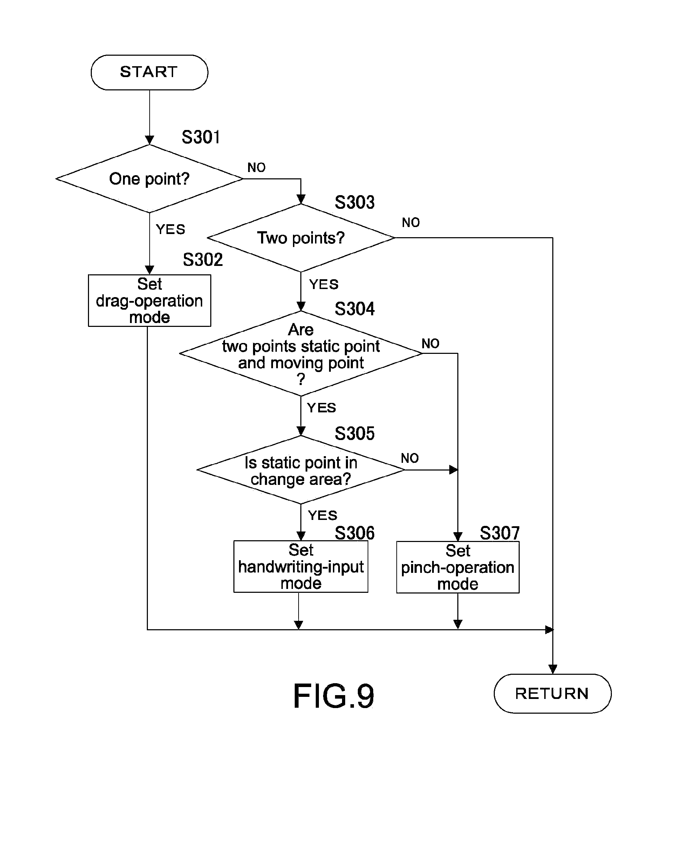

Fig. 9 is a flowchart relating to processing according to operations on the touch panel 14 in the information processing apparatus of this embodiment.

The CPU 21 determines the number of points pointed by a user based on a series of coordinate data input from the touch panel 14 via the touch panel interface section 27. In a case of determining that only one point is pointed (Step S301, YES), the CPU 21 sets the drag-operation mode, and executes processing corresponding to the drag operation according to movement of the pointed point (Step S302).

Further, in a case of determining that two points are pointed (Step S303, YES), the CPU 21 determines if those two points are a static point and a moving point (Step S304). In a case of determining that the two points are a static point and a moving point, the CPU 21 determines if the static point is in the change area 31 of the detection surface of the touch panel 14 (Step S305). If the static point is in the change area 31, the CPU 21 determines that the condition of the above-mentioned operation 3 is satisfied. Therefore, the CPU 21 sets the handwriting-input mode, and generates user-write data based on a series of coordinate data of the moving point (Step S306).

Note that, in a case of determining that the two points are not the combination of a static point and a moving point in Step S304, and in a case of determining that the static point is not in the change area 31 in Step S305, the CPU 21 sets the pinch-operation mode, and executes processing corresponding to the pinch operation according to movements of the two detected points (Step S307).

As described above, according to this embodiment also, change to the handwriting-input mode may be executed based on a predetermined operation on the touch panel 14, and input of handwriting data may be started immediately. Further, an action to establish the operation mode to execute handwriting input on the touch panel 14 by a user itself may be detected as an operation to change to the handwriting-input mode. Therefore, a user may shift to the handwriting-input operation seamlessly, and operability may be improved.

### (Modified Example 1)

In the above-mentioned third embodiment, the change area 31 is provided on the edge portions of the four sides of the detection surface of the touch panel 14. However, the approach described herein is not limited to this.

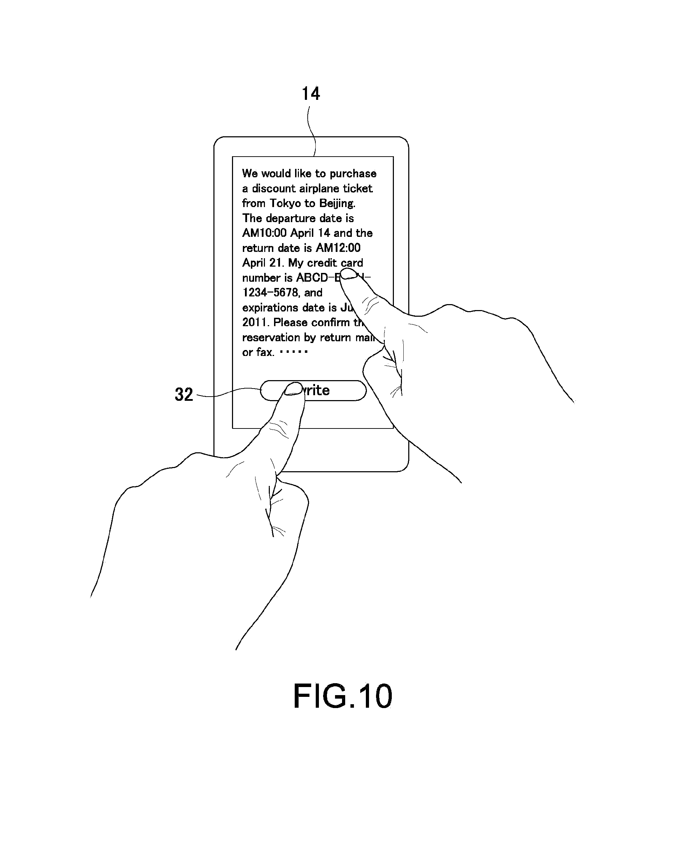

For example, as shown in Fig. 10, the change area may be arranged as a visible object 32 on an arbitrary position on the detection area of the touch panel 14. Further, the position of the object 32 may be changed by a user freely.

### (Fourth Embodiment)

Next, the information processing apparatus in which the operation 4 is employed as the "predetermined change operation to handwriting-input mode" will be described.

In the information processing apparatus of this embodiment, the CPU 21 distinguishes a point pointed with a pen from a point pointed with a finger of a user on the touch panel 14. As a method of distinguishing a point pointed with a pen from a point pointed with a finger, for example, a method of distinguishing based on sizes or shapes of pointed points or the like may be employed. A point pointed with a pen is smaller in size than a point pointed with a finger. Further, the shape of a point pointed with a pen is relatively stable. Therefore, a point pointed with a pen may be distinguished from a point pointed with a finger without a problem from a viewpoint of accuracy.

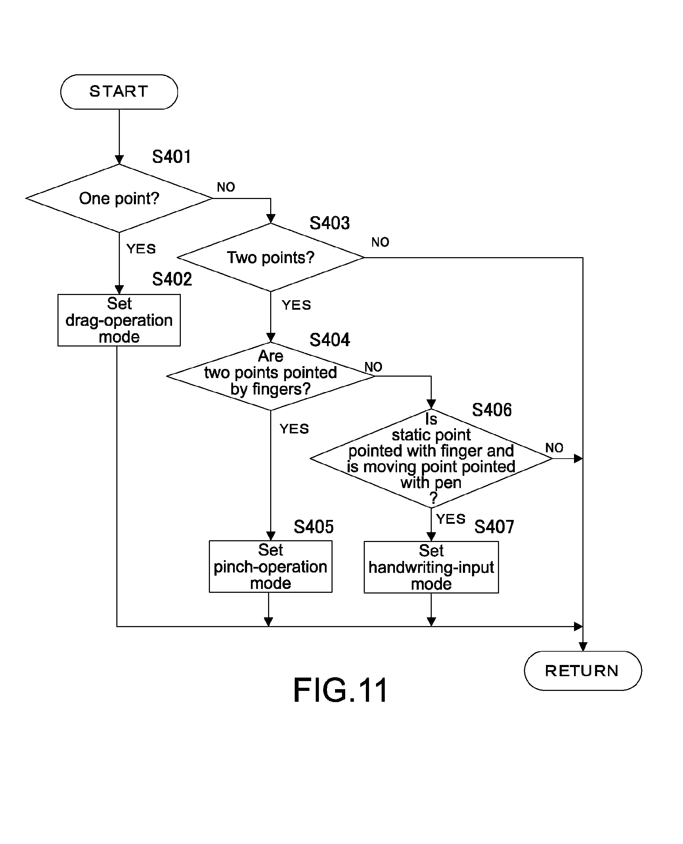

Fig. 11 is a flowchart relating to processing according to operations on the touch panel 14 in the information processing apparatus of this embodiment.

The CPU 21 determines the number of points pointed by a user based on a series of coordinate data input from the touch panel 14 via the touch panel interface section 27. In a case of determining that only one point is pointed (Step S401, YES), the CPU 21 sets the drag-operation mode, and executes processing corresponding to the drag operation according to movement of the pointed point (Step S402).

Further, in a case of determining that two points are pointed (Step S403, YES), the CPU 21 determines if those two points are points pointed by fingers, respectively (Step S404). In a case of determining that the two points are points pointed by fingers, respectively (Step S404, YES), the CPU 21 sets the pinch-operation mode, and executes processing corresponding to the pinch operation according to movements of the two detected points (Step S405).

Further, the CPU 21 determines if the condition of the above-mentioned operation 4 is established. That is, the CPU 21 determines if a static point is pointed with a finger and a moving point is pointed with a pen (Step S406). In a case where the condition of the above-mentioned operation 4 is established (Step S406, YES), the CPU 21 sets the handwriting-input mode, and generates user-write data based on a series of coordinate data of the moving point (Step S407).

Note that, in a case where the condition of the above-mentioned operation 4 is not established in Step S406, and in a case where three or more points are detected in Step S403, the handwriting-input operation is not executed.

As described above, according to this embodiment also, change to the handwriting-input mode may be executed based on a predetermined operation on the touch panel 14, and input of handwriting data may be started immediately. Further, an action to establish the operation mode to execute handwriting input on the touch panel 14 by a user itself may be detected as an operation to change to the handwriting-input mode. Therefore, a user may shift to the handwriting-input operation seamlessly, and operability may be improved.

### (Fifth Embodiment)

In this embodiment, the following operation 5 is employed as the "predetermined change operation to handwriting-input mode".

Operation 5: An operation in which one static point and one moving point are pointed simultaneously, and the moving point is moved for a predetermined angle or more and for a predetermined distance or more.

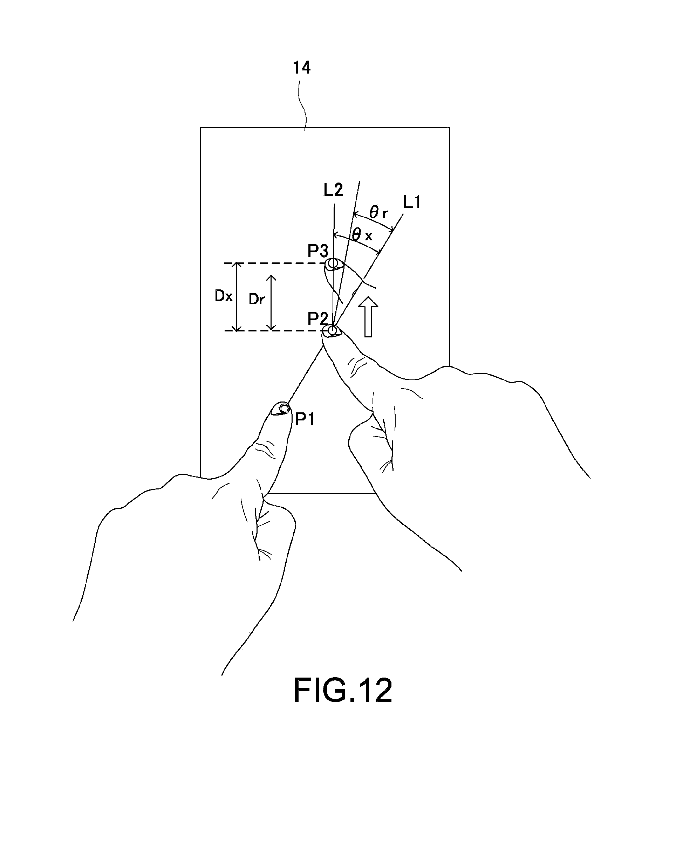

Fig. 12 is a diagram explaining the determination method of the above-mentioned operation 5 in detail. In Fig. 12, a point pointed with a fingertip of the left hand of a user is referred to as static point point P1. A point pointed with a fingertip of the right hand first is referred to as early moving point P2. It is assumed that the position of a point pointed with the fingertip of the right hand is moved from the early moving point P2 to the moving point P3 for a distance Dx. Further, an angle between a line L1 and a line L2 is referred to as a moving-point angle θx. Here, the line L1 is a line connecting the static point P1 and the early moving point P2. The line L2 is a line connecting the moving point P2 and the moving point P3 after moving. In this case, when both respective conditions of θx≥θr and Dx≥Dr are satisfied, generation of the operation 5 is determined. Here, θr is a preset threshold of a moving angle of a moving point. Dr is a preset threshold of a moving distance of a moving point. Those thresholds may be arbitrarily changed by a user at will.

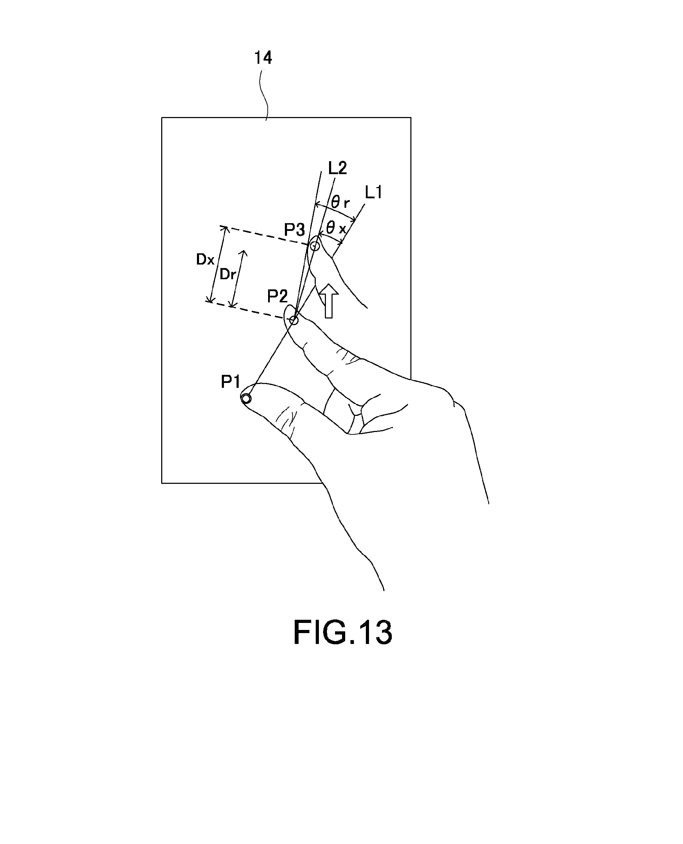

Further, in a case where at least one condition of the respective conditions θx≥θr and Dx≥Dr is not satisfied, the pinch operation is determined. Fig. 13 is an example of the pinch operation. In this example, of the respective conditions θx≥θr and Dx≥Dr, the condition Dx≥Dr is satisfied, but the condition θx≥θr is not satisfied. Therefore, the pinch operation is determined.

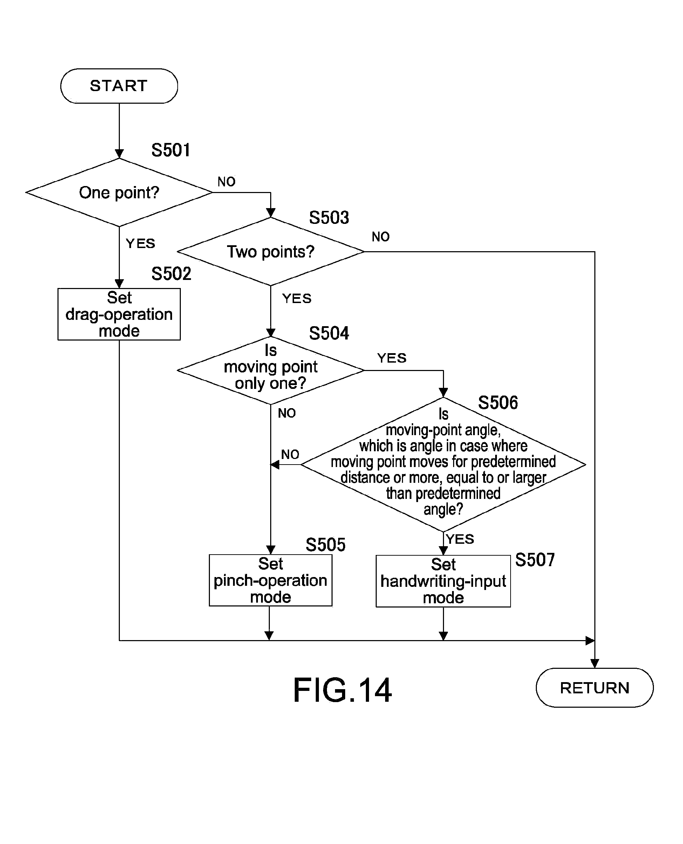

Fig. 14 is a flowchart relating to processing according to operations on the touch panel 14 in the information processing apparatus of this embodiment.

The CPU 21 determines the number of points pointed by a user based on a series of coordinate data input from the touch panel 14 via the touch panel interface section 27. In a case of determining that only one point is pointed (Step S501, YES), the CPU 21 sets the drag-operation mode, and executes processing corresponding to the drag operation according to movement of the pointed point (Step S502).

Further, in a case of determining that two points are pointed (Step S503, YES), the CPU 21 determines if only one point of those two points is a moving point (Step S504). In a case where both the two points are moving points or in a case where both the two points are static points (Step S504, NO), the CPU 21 sets the pinch-operation mode, and executes processing corresponding to the pinch operation according to movements of the two detected points (Step S505).

In a case of determining only one point of the two points is a moving point (Step S504, YES), the CPU 21 determines if the moving-point angle θx is equal to or larger than the predetermined angle θr (Step S506). Here, the moving-point angle θx is an angle in a case where the moving point moves for the predetermined distance Dr or more. In a case of determining that the moving-point angle θx, which is an angle in a case where the moving point moves for the predetermined distance Dr or more, is equal to or larger than the predetermined angle θr (Step S506, YES), the CPU 21 sets the handwriting-input mode, and generates user-write data based on a series of coordinate data of the moving point (Step S507). Further, even if the moving point moves for the predetermined distance Dr or more, in a case where the moving-point angle θx is smaller than the predetermined angle θr or in a case where the distance Dx that the moving point moves does not reach the predetermined distance Dr (Step S506, NO), the CPU 21 sets the pinch-operation mode, and executes processing corresponding to the pinch operation (Step S505).

As described above, according to this embodiment also, change to the handwriting-input mode may be executed based on a predetermined operation on the touch panel 14, and input of handwriting data may be started immediately. Further, an action to establish the operation mode to execute handwriting input on the touch panel 14 by a user itself may be detected as an operation to change to the handwriting-input mode. Therefore, a user may shift to the handwriting-input operation seamlessly, and operability may be improved.

The approach described herein is not limited to the above-mentioned embodiments, but may be variously modified within the scope of the appended claims.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisages as aspects of the present invention.

## Claims

1. An information processing apparatus, comprising:
a display section including a screen;
a touch panel arranged such that the touch panel is superimposed on the screen; and
a controller configured
to detect a predetermined mode-changing operation including an operation in which at least two points on the touch panel are pointed as a static point and a moving point, respectively, and to set a writing mode, and
to input a series of coordinate data corresponding to a moving path of the moving point as write data.

2. The information processing apparatus according to claim 1, wherein the controller is configured to cancel the writing mode if it is determined that neither the static point nor the moving point are detected when the writing mode is set.

3. The information processing apparatus according to claim 1 or 2, wherein
the controller is configured
to determine, in a case where a moving speed of a determined point is less than a first threshold, the point as the static point, and
to determine, in a case where a moving speed of a determined point is equal to or more than the first threshold, the point as the moving point.

4. The information processing apparatus according to any preceding claim, wherein
the controller is configured to redetermine, when a moving speed of a point determined as the moving point reaches a value equal to or less than a second threshold smaller than the first threshold, the moving point as the static point.

5. The information processing apparatus according to any preceding claim, wherein
the controller is configured to detect an operation in which a plurality of static points and one moving point are pointed simultaneously as the mode-changing operation.

6. The information processing apparatus according to any preceding claim, wherein
the controller is configured to detect an operation in which one static point and one moving point are pointed simultaneously and a size of the static point and a size of the moving point satisfy a predetermined relation as the mode-changing operation.

7. The information processing apparatus according to any preceding claim, wherein
the controller is configured to detect an operation in which one static point and one moving point are pointed simultaneously and the static point is pointed in a change area defined on the touch panel as the mode-changing operation.

8. The information processing apparatus according to any preceding claim, wherein
the controller is configured to detect an operation in which one static point is pointed with a finger and one moving point is pointed with a pen simultaneously as the mode-changing operation.

9. The information processing apparatus according to any preceding claim, wherein
the controller is configured to detect an operation in which one static point and one moving point are pointed simultaneously and the moving point moves for a predetermined angle or more and for a predetermined distance or more as the mode-changing operation.

10. An information processing method, comprising:
detecting, by a controller, a predetermined mode-changing operation including an operation in which at least two points on a touch panel arranged such that the touch panel is superimposed on a screen are pointed as a static point and a moving point, respectively, and setting a writing mode; and
inputting, by the controller, a series of coordinate data corresponding to a moving path of the moving point as write data.

11. A program, causing a computer to function as:
a controller configured
to detect a predetermined mode-changing operation including an operation in which at least two points on a touch panel arranged such that the touch panel is superimposed on a screen are pointed as a static point and a moving point, respectively, and to set a writing mode, and
to input a series of coordinate data corresponding to a moving path of the moving point as write data.

12. A computer-readable medium storing the program of claim 11.
